# EUROPÄISCHE PATENTSCHRIFT

(11) **EP 3 569 990 B1**
(45) Veröffentlichungstag und Bekanntmachung des Hinweises auf die Patenterteilung: **17.02.2021**
(21) Anmeldenummer: 18173031.8
(22) Anmeldetag: 17.05.2018
(51) Int. Cl.: G01N 21/15, G01F 23/284, G01S 13/88, H01Q 1/22, G01S 7/03, G01S 7/02, H01Q 1/42

(54) **BEFESTIGUNGSANORDNUNG FÜR EIN RADARFÜLLSTANDMESSGERÄT**
ATTACHMENT ASSEMBLY FOR A RADAR FILL LEVEL MEASURING DEVICE
DISPOSITIF DE FIXATION POUR UN APPAREIL DE MESURE DE NIVEAU DE REMPLISSAGE PAR RADAR

(43) Veröffentlichungstag der Anmeldung: 20.11.2019
(73) Patentinhaber: VEGA Grieshaber KG, 77709 Wolfach (DE)
(72) Erfinder: Kienzle, Klaus, 77736 Zell am Harmersbach (DE); Lenk, Fritz, 77761 Schiltach (DE)
(74) Vertreter: Patentanwälte Bauer Vorberg Kayser

(56) Entgegenhaltungen:
- EP-A1- 2 698 869
- DE-A1- 4 336 494
- DE-C1- 10 060 069
- DE-T1- 19 982 569
- DE-T2-602005 003 297

## Beschreibung

Die vorliegende Erfindung betrifft eine Befestigungsanordnung für ein Radarfüllstandmessgerät mit den Merkmalen des Oberbegriffs das Patentanspruchs 1.

Feldgeräte, insbesondere Feldgeräte, die zur Messung von Füllständen oder Grenzständen eingesetzt werden, basieren oftmals auf dem Prinzip der Laufzeitmessungen. Bei den Laufzeitmessungen werden die Signallaufzeiten von ausgesandten Messsignalen, insbesondere Radarsignalen oder geführten Mikrowellenpulsen bestimmt. Aus diesen Signallaufzeiten wird dann die gewünschte Messgröße ermittelt, beispielsweise ein Füllstand oder Grenzstand. Die Signale weisen eine bestimmte Frequenz auf. Radarsignale und Mikrowellensignale lassen sich dem Bereich der Hochfrequenztechnik (HF-Technik) zuordnen. Als Signale, die im Bereich der Hochfrequenztechnik liegen, werden typischerweise Signale im Frequenzbereich bis 2 GHz als geführte Mikrowellensignale verwendet und Signale im Bereich von 5 GHz bis 85 GHz und darüber hinaus als Radarsignale eingesetzt.

Aus dem Stand der Technik sind Radarmessgeräte, beispielsweise Radar-Füllstandmessgeräte bekannt, die nach dem Laufzeitprinzip einen Füllstand eines in einem Behälter befindlichen Füllguts, insbesondere von Flüssigkeiten und Schüttgütern detektieren. Solche Radar-Füllstandmessgeräte sind beispielsweise mit Hornantennen ausgestattet, über die ein eingekoppeltes HF-Signal in Richtung des Füllgutes abgestrahlt und von diesem reflektiert wird. In einem kombinierten Sende- und Empfangssystem des Radar-Füllstandmessgerätes werden die vom Füllgut reflektierten Mikrowellensignale erfasst und ausgewertet.

Die Radar-Füllstandmessgeräte sind häufig über eine Befestigungsanordnung mit einem Mikrowellenfenster zur räumlichen und thermischen Trennung und mikrowellenmäßigen Verbindung eines ersten Raumes und eines zweiten Raumes mit einer plattenförmigen, zumindest teilweise mikrowellendurchlässigen scheibenförmigen Barriere an dem Messbehälter oder allgemeiner der Messstelle angeordnet. Die Befestigungsanordnung dient dazu, das Radar-Füllstandmessgerät insbesondere thermisch von dem Messbehälter zu entkoppeln, um so negative thermische Einflüsse von dem Radarfüllstandmessgerät fern zu halten. Bei den bekannten Befestigungsanordnungen ist die Barriere als eine senkrecht zur der Hauptabstrahlrichtung ausgerichtete Platte oder Linse ausgebildet. An diesen Anordnungen wird es als nachteilig empfunden, dass von der Barriere erhebliche Störreflexionen ausgehen, die eine Füllstandmessung beeinträchtigen. Entsprechender Stand der Technik ist bspw. in der DE 100 60 069 C1 und der EP 2 698 869 A1 angegeben.

Es ist die Aufgabe der vorliegenden Erfindung, eine bekannte Befestigungsanordnung so weiterzubilden, dass diese die aus dem Stand der Technik bekannten Probleme überwindet, insbesondere die Störreflexionen reduziert.

Diese Aufgabe wird durch eine Befestigungsanordnung mit den Merkmalen des Patentanspruchs 1 gelöst.

Vorteilhafte Weiterbildungen der Erfindung sind Gegenstand abhängiger Patentansprüche.

Eine erfindungsgemäße Befestigungsanordnung für ein Radar-Füllstandmessgerät mit einer Antenne mit einer Hauptabstrahlrichtung mit einem Mikrowellenfenster zur räumlichen und thermischen Trennung und mikrowellenmäßigen Verbindung eines ers ten Raumes und eines zweiten Raumes mit einer plattenförmigen, zumindest teilweise mikrowellendurchlässigen scheibenförmigen Barriere, zeichnet sich dadurch aus, dass eine zu der Antenne orientierte Oberfläche der Barriere mit der Hauptabstrahlrichtung einen Winkel ungleich 90° einschließt.

Unter der Hauptabstrahlrichtung einer Antenne soll in der vorliegenden Anmeldung insbesondere eine hauptsächliche Ausbreitungsrichtung von ausgesandten elektromagnetischen Wellen verstanden werden. In der Regel ist diese Hauptabstrahlrichtung eine Richtung in Verlängerung einer Symmetrieachse der Antenne und ist senkrecht auf eine Füllgutoberfläche ausgerichtet.

Dadurch, dass die zu der Antenne orientierte Oberfläche der Barriere mit der Hauptabstrahlrichtung der Antenne einen Winkel ungleich 90° einschließt wird erreicht, dass an der Oberfläche der Barriere auftretende Reflexionen nicht unmittelbar zu der Antenne reflektiert sondern seitlich abgelenkt werden. Auf diese Weise werden Störsignale durch Reflexionen an der Barriere vermindert und eine Messgenauigkeit der Anordnung verbessert.

Die Barriere kann bspw. aus Keramik, insbesondere Aluminiumoxidkeramik, Glas oder Kunststoff bestehen. Als Kunststoffe können insbesondere Hochleistungskunststoffe, bspw. Polyetheretherketon (PEEK) oder aromatische Polyimide, wie sie beispielsweise von der Firma DuPont unter der Marke VESPEL vertrieben werden, zum Einsatz kommen.

Eine Dicke der Barriere kann abhängig von der Wellenlänge der verwendeten elektromagnetischen Strahlung im Material der Barriere und den auftretenden mechanischen Belastungen im Idealfall A/2 oder ein ganzzahliges Vielfaches davon betragen. Durch Einsatz der vorliegenden Erfindung können verschiedene (vorhandene) Antennensysteme bzw. Radar-Füllstandmessgeräte mit beschränkten Temperatureigenschaften in Anwendungen mit heißen Prozessbedingungen eingesetzt werden.

Der Winkel zwischen der Hauptabstrahlrichtung und der Oberfläche der Barriere beträgt vorzugweise mehr als 60°, weiter bevorzugt, mehr als 75°. Ein positiver Effekt wird bereits ab einem Winkel von wenigen Grad verzeichnet, wobei ein besonders guter Effekt ab einer Abweichung von 10° erzielt werden kann. Besonders bevorzugt werden daher Winkel zwischen 60° und 85°, insbesondere zwischen 70° und 80°. Jeder Winkel der sich von 90° unterscheidet bringt eine Verbesserung der direkten Reflexion.

Eine erfindungsgemäße Befestigung der Barriere kann erreicht werden, wenn diese in einem Haltering angeordnet ist, der wiederum in oder an einem Flansch befestigt ist. Mittels eines Flanschs kann die Befestigungsanordnung an den üblicherweise verwendeten Befestigungsstutzen von bspw. Füllguttanks aber auch an anderen Messstellen einfach befestigt werden. Es können sämtliche üblichen Flanschverbindungen wie bspw. Schraubflansche, Klemmflansche oder Einschweißflansche zum Einsatz kommen. Eine einfache Befestigung des Halterings an dem Flansch kann durch eine Verschraubung erreicht werden. Es können aber auch andere Befestigungsmethoden, wie bspw. eine Klemmverbindung zum Einsatz kommen.

Eine Innenkontur des Flanschs kann insbesondere konisch oder kugelsegmentförmig ausgestaltet sein. Auf diese Weise kann verhindert werden, dass der Haltering durch die Öffnung in das Innere eines Tanks gerät.

Der Haltering kann wenigstens einen Spülluftkanal aufweisen, über den eine dem Prozess zugewandte Oberfläche der Barriere mit Spülluft beaufschlagbar ist. Auf diese Weise kann eine Oberfläche der Barriere von Partikeln freigehalten werden um Anhaftungen und eine dadurch verursachte reduzierte Durchlässigkeit der Barriere zu verhindern. Gleichzeitig kann die Barriere durch die Spülluft gekühlt werden.

Um eine Anpassung des Winkels zwischen der Hauptabstrahlrichtung der Antenne und der der Antenne zugewandten Oberfläche der Barriere zu ermöglichen, ist der Haltering relativ zu dem Flansch verkippbar ausgestaltet.

Verkippbar soll im Sinne der vorliegenden Anmeldung bedeuten, dass ein Winkel zwischen dem Haltering und dem Flansch veränderlich ist, sodass die in dem Haltering angeordnete Barriere ebenfalls gegenüber dem Flansch und damit gegenüber der Hauptabstrahlrichtung der Antenne in ihrem Winkel veränderlich ist.

Dies kann bspw. dadurch erreicht werden, dass der Haltering die Außenkontur einer Kugelschicht und der Flansch eine dazu korrespondierende Innenkontur aufweist.

Eine Kugelschicht im Sinne der vorliegenden Anmeldung ist ein durch zwei planparallele Flächen begrenzter Abschnitt einer Kugel, wobei beide Flächen, die nachfolgend auch als Deckfläche und Bodenfläche bezeichnet werden die Kugel schneiden.

Weisen Flansch und Haltering derart ausgebildete und zueinander korrespondierende Innen- bzw. Außenkonturen auf, so kann der Haltering in dem Flansch verkippt werden um so den Winkel zwischen der Oberfläche der Barriere und der Hauptabstrahlrichtung anzupassen. Eine solche Anpassungsmöglichkeit ist vorteilhaft, da der optimale Winkel, unter dem möglichst wenig Störreflexionen auftreten abhängig von der verwendeten Antenne sowie der verwendeten Signalfrequenz bzw. Wellenlänge sein können.

Eine einfache mechanische Anordnung wird erreicht, wenn die Antenne und die Barriere in einem Gehäuse angeordnet sind, das die Antenne und die Barriere voneinander beabstandet haltert. In einer einfachen Ausgestaltungsform kann ein solches Gehäuse die Form eines Kreiszylinders aufweisen, wobei in einer Bodenfläche des Kreiszylinders die Barriere oder der Haltering mit der Barriere angeordnet ist, und eine Deckfläche als ein Deckel ausgebildet ist, in dem die Antenne des Füllstandmessgerätes gehaltert ist.

Der Deckel kann mit einer Mehrzahl unterschiedlicher Adapter zur Aufnahme unterschiedlicher Antennen, insbesondere Antennen unterschiedlicher Größe, ausgebildet sein. Alternativ kann der Deckel aber auch austauschbar sein, wobei unterschiedliche Deckel zur Aufnahme unterschiedlicher Antennen ausgebildet sind.

Eine Position des Halterings kann über wenigstens eine, vorzugsweise zwei von außerhalb des Gehäuses zugänglichen Verstelleinrichtungen veränderbar und festlegbar sein. Auf diese Weise wird eine Verstellung des Halterings und damit eine Einstellung des Winkels zwischen der Barriere und der Hauptabstrahlrichtung einfach realisiert. Wenn von einer rotationssymmetrischen Abstrahlcharakteristik der Antenne ausgegangen wird, ist eine einzige Verstelleinrichtung, mit der der Haltering bspw. um eine Achse geschwenkt werden kann, ausreichend. Wird eine Polarisation des abgestrahlten Signals berücksichtigt, kann es ferner notwendig sein, dass der Winkel in einer bestimmten rotatorischen Ausrichtung eingestellt wird. In diesen Fällen, kann eine Ausgestaltung mit zwei Verstelleinrichtungen, die vorzugsweise um 90° versetzt auf den Haltering wirken, zu bevorzugen.

Die Verstelleinrichtungen können beispielsweise als zwei in dem Gehäuse angeordnete Rändelschrauben ausgebildet sein. Über solche Rändelschrauben kann eine Einstellung des Winkels fein justiert und gleichzeitig gegen versehentliches Verstellen gesichert werden. Die Rändelschrauben können bspw. in Axialrichtung auf die Kugelschicht wirken, sodass diese je nach Einstellung gegenüber der Hauptabstrahlrichtung verstellt wird. Die Kugelschicht kann dazu bspw. in Richtung der Rändelschrauben federbelastet oder gelenkig mit diesen verbunden ausgebildet sein.

Alternativ kann die Verstelleinrichtung als wenigstens ein Schwenkhebel ausgebildet sein. Mit Hilfe eines solchen Schwenkhebels kann - je nach Ausgestaltung des Hebels - ein Verkippen des Halterings um eine Achse oder um zwei Achsen erreicht werden. Werden zwei Schwenkhebel in Umfangsrichtung versetzt angeordnet, so kann eine Verschwenken in jedem Fall um zwei unterschiedliche Achsen erfolgen. Vorzugsweise sind die Schwenkhebel dafür um 90° versetzt angeordnet.

Um Störreflexionen weiter zu vermindern kann das Gehäuse innenseitig wenigstens abschnittsweise bevorzugt aber vollständig mit einem mikrowellenabsorbierenden Material ausgekleidet oder aus diesem gefertigt sein.

Geeignete mikrowellenabsorbierende Materialien können bspw. kohlenstofffaserverstärkte Kunststoffe, Schaumabsorber, Magnetische Absorber oder ein poröses, bspw. geschäumtes Keramikmaterial aus Aluminiumoxid oder Siliciumcarbid sein.

Wie bereits angedeutet kann das Gehäuse entweder über verschiedene Adapter oder austauschbare Deckel geeignet ausgestaltet sein, eine Mehrzahl unterschiedlich ausgestalteter Antennen aufzunehmen.

Der Haltering kann auch zweiteilig als zwei in Umfangsrichtung gegeneinander verdrehbare Keilringe ausgebildet sein, von denen der eine zumindest in Axialrichtung in dem Gehäuse festgelegt ist und der andere die Barriere haltert.

Durch ein Verdrehen der Keilringe gegeneinander ändert sich ein Winkel zwischen diesen, sodass auch auf diese Weise eine einfache Verstellmöglichkeit für den Winkel zwischen der Hauptabstrahlrichtung und der Barriere erreicht werden kann.

Die Barriere kann wenigstens auf einer der Antenne abgewandten Oberfläche eine Beschichtung aufweisen. Die Beschichtung kann vorzugsweise als Antihaftbeschichtung ausgestaltet sein, kann aber auch eine Schutzschicht gegen abrasive Medien oder dergleichen umfassen.

Erfindungsgemäß weist ein Radarfüllstandmessgerät mit einer Antenne mit einer Hauptabstrahlrichtung eine Befestigungsanordnung mit einem Mikrowellenfenster zur räumlichen und thermischen Trennung und mikrowellenmäßigen Verbindung eines ersten Raumes und eines zweiten Raumes mit einer plattenförmigen, zumindest teilweise mikrowellendurchlässigen scheibenförmigen Barriere auf, wobei eine zu der Antenne orientierte Oberfläche der Barriere mit der Hauptabstrahlrichtung einen Winkel ungleich 90° einschließt.

Die vorliegende Erfindung wird nachfolgend unter Bezugnahme auf die beigefügten Figuren eingehend erläutert.

Es zeigen:
Figur 1 eine Befestigungsanordnung für ein Radarfüllstandmessgerät und
Figur 2 ein Ausführungsbeispiel einer Befestigungsanordnung gemäß der vorliegenden Erfindung.

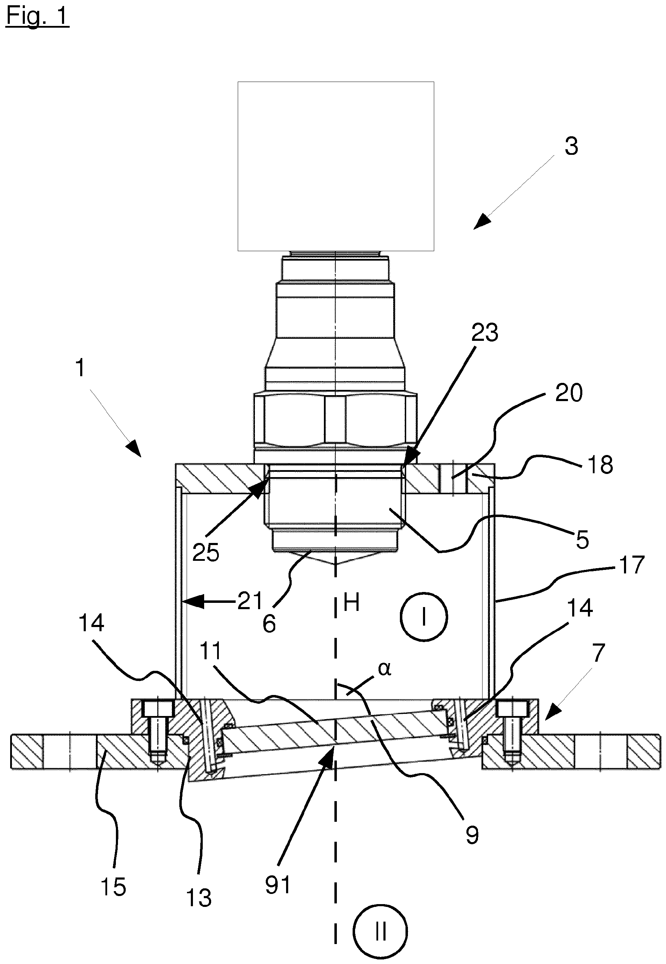

Figur 1 zeigt eine Befestigungsanordnung 1 für ein Radarfüllstandmessgerät. Die Befestigungsanordnung 1 besteht im Wesentlichen aus einem zylinderförmigen Gehäuse 17, dass oberseitig mit einem Deckel 18 und unterseitig mit einem Mikrowellenfenster 7 abgeschlossen ist. Das Mikrowellenfenster 7 ist im vorliegenden Ausführungsbeispiel durch einen Haltering 13 in den eine Barriere 9 eingesetzt ist, gebildet. Die Barriere 9 ist für elektromagnetische Strahlung der vorliegend verwendeten Wellenlänge durchlässig und trennt damit einen Innenraum des Gehäuses 17, vorliegend auch als erster Raum I bezeichnet, von einem zweiten Raum II, der das Innere eines Messerbehälters ist.

Das Mikrowellenfenster 7 ist in einen Flansch 15 eingesetzt und über eine Mehrzahl umlaufend angeordnete Schrauben mit diesem verbunden. Der Flansch 15 ist seinerseits als sogenannter Schraubflansch ausgebildet, der mit einer korrespondierenden Befestigungsanordnung eines Messbehälters, beispielsweise eines Tanks verbindbar ist.

In dem Deckel 18 des Gehäuses 17 ist ein Radar-Füllstandmessgerät 3 befestigt, dass im vorliegenden Ausführungsbeispiel über ein an dem Radar-Füllstandmessgerät 3 befindliches Außengewinde 23 in ein korrespondierendes Innengewinde 25 des Deckels 18 eingeschraubt ist. Eine Antenne 5 des Radar-Füllstandmessgerätes 3 ist im vorliegenden Ausführungsbeispiel als Hornantenne ausgebildet, die vorderseitig mit einer Abdeckung 6 zur Strahlformung gegenüber dem ersten Raum I abgeschlossen ist. Die Antenne 5 weist eine Hauptabstrahlrichtung H auf, die in Verlängerung einer Längsachse des Radar-Füllstandmessgerätes 3 verläuft.

Wie aus Figur 1 ersichtlich schließt eine zu der Antenne 5 hin orientierte Oberfläche 11 der Barriere 9 mit der Hauptabstrahlrichtung H einen Winkel α ein, der weniger als 90°, vorliegend etwa 85° beträgt. Dadurch, dass die Oberfläche 11 gegenüber der Hauptabstrahlrichtung H um 85° geneigt ist wird erreicht, dass von dem Radar-Füllstandmessgerät 3 ausgesendete elektromagnetischen Wellen an der Oberfläche 11 nicht senkrecht und unmittelbar zum Radar-Füllstandmessgerät 3 zurückreflektiert werden, sondern dass diese entsprechend den Reflexionsgesetzen mit Einfallswinkel = Ausfallswinkel insgesamt 10° seitlich abgelenkt werden. Die von der Barriere 9 hervorgerufene Störreflexion trifft damit nicht unmittelbar auf die Antenne 5 des Radar-Füllstandmessgerätes 3 sondern wird seitlich von diesem in das Gehäuse 17 abgelenkt. Um weitere unkontrollierte Reflexionen und/oder Resonanzen zu vermeiden ist eine Innenseite des Gehäuses 17 mit einem mikrowellenabsorbierenden Material 21 ausgekleidet.

Der Haltering 13 ist mit sechs Spülluftkanälen 14 versehen von denen zwei in der vorliegenden Schnittdarstellung sichtbar sind, die eine über einen Spülluftanschluss 20, der rückseitig in dem Deckel 18 vorgesehen ist zugeführte Spülluft auf eine von der Antenne 5 abgewandte Seite der Barriere 9 lenken. Die Barriere 9 kann damit einerseits von Partikeln freigehalten werden und andererseits über die Spülluft gekühlt werden. Zusätzlich zu den Spülluftkanälen 14 ist die Barriere 9 auf der von der Antenne 5 abgewandten Seite mit einer Beschichtung 91 versehen, die als Antihaftbeschichtung ausgeführt ist. Auf diese Weise können ebenfalls Anhaftungen von Partikeln und dergleichen verringert werden.

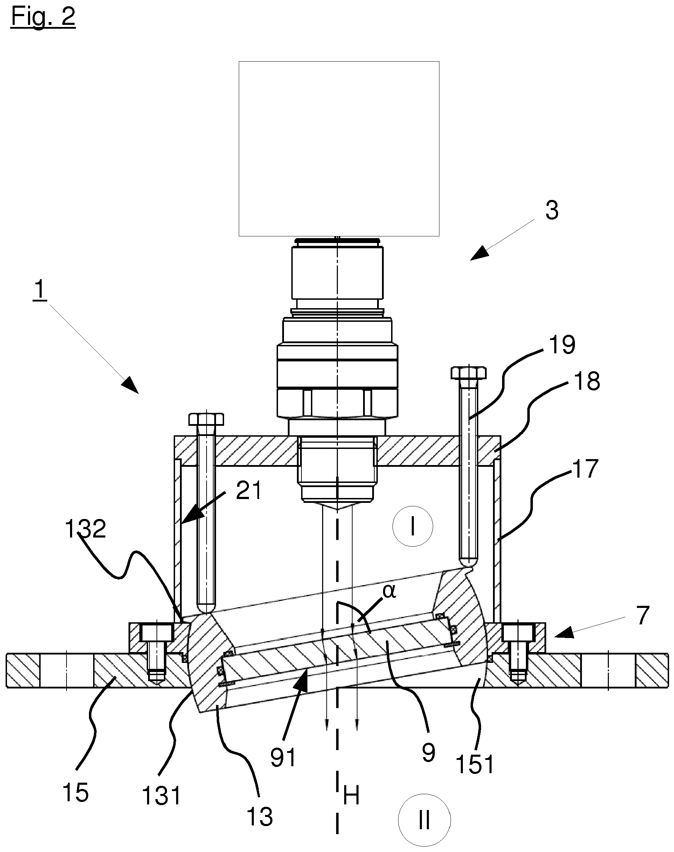

In Figur 2 ist ein Ausführungsbeispiel einer Befestigungsanordnung 1 gemäß der vorliegenden Anmeldung gezeigt. In dem in Figur 2 dargestellten Ausführungsbeispiel weist das Mikrowellenfenster 7 einen Haltering 13 auf, der die Außenkontur 131 einer Kugelschicht aufweist und in einem Flansch 15 mit dazu korrespondierende Innenkontur 151 angeordnet ist. Die Außenkontur 131 des Haltering 13 weist an einem der Antenne 5 zugewandten Ende eine Anformung 132 auf, die im vorliegenden Ausführungsbeispiel als umlaufender Steg ausgebildet ist. Durch diese Anformung 132 wird verhindert, dass der Haltering 13 in Richtung des zweiten Raums II aus der Befestigungsanordnung 1 herausgleitet und beispielsweise in das dort befindliche Messgefäß fällt.
Eine Position des Halterings 13 relativ zu dem Flansch 15 ist im vorliegenden Ausführungsbeispiel über zwei im Deckel 18 des Gehäuses 17 angeordnete Rändelschrauben 19 einstellbar. Auf diese Weise ist der Winkel α zwischen der Hauptabstrahlrichtung H und der der Antenne 5 zugewandten Oberfläche 11 der Barriere 9 einstellbar, sodass abhängig von der Polarisation und Wellenlänge der verwendeten elektromagnetischen Strahlung des Radar-Füllstandmessgeräts 3 ein besonders gut geeigneter Winkel α ausgewählt werden kann.

In einer alternativen Ausgestaltungsform kann der Haltering 13 zweiteilig aufgebaut sein, wobei die beiden Teile als gegeneinander verdrehbar ausgebildete Keilringe ausgebildet sind. Einer der Keilringe ist in einer Halterung des Mikrowellenfenster 7 oder mit dem Flansch 15 in Axialrichtung feststehen verbunden, wobei der andere der Keilringe gegen diesen verdrehbar ausgestaltet ist und die Barriere 9 haltert. Durch ein Verdrehen der Keilringe gegeneinander ist damit der Winkel α zwischen der der Antenne 5 zugewandten Oberfläche 11 und der Hauptabstrahlrichtung H einstellbar.

Eine solche Ausgestaltung ermöglicht ebenfalls die Einbringung von Spülluftkanälen 14 in den Haltering 13, sodass die Barriere 9 von Partikeln gereinigt und durch die Spülluft gekühlt werden kann.

### Bezugszeichenliste

- 1: Befestigungsanordnung

- 3: Radarfüllstandmessgerät

- 5: Antenne
- 6: Abdeckung
- 7: Mikrowellenfenster

- 9: Barriere

- 11: Oberfläche

- 13: Haltering
- 14: Spülluftkanal
- 15: Flansch

- 17: Gehäuse
- 18: Deckel
- 19: Verstelleinrichtung
- 20: Spülluftanschluss
- 21: mikrowellenabsorbierendes Material

- 23: Außengewinde

- 91: Beschichtung

- 131: Außenkontur
- 132: Anformung
- 151: Innenkontur
- I: erster Raum
- II: zweiter Raum

- α: Winkel
- H: Hauptabstrahlrichtung

## Patentansprüche

1. Befestigungsanordnung (1) für ein Radarfüllstandmessgerät (3) mit einer Antenne (5) mit einer Hauptabstrahlrichtung (H) mit einem Mikrowellenfenster (7) zur räumlichen und thermischen Trennung und mikrowellenmäßigen Verbindung eines ersten Raumes (I) und eines zweiten Raumes (II) mit einer plattenförmigen, zumindest teilweise mikrowellendurchlässigen scheibenförmigen Barriere (9), wobei eine zu der Antenne (5) orientierte Oberfläche der Barriere (9) mit der Hauptabstrahlrichtung (H) einen Winkel ungleich 90° einschließt, wobei die Barriere (9) in einem Haltering (13) angeordnet ist, der in einem Flansch (15) sitzt **dadurch gekennzeichnet, dass**
der Haltering (13) relativ zu dem Flansch (15) verkippbar ausgestaltet ist.

2. Befestigungsanordnung (1) gemäß Anspruch 1,
**dadurch gekennzeichnet, dass** der Winkel (α) mehr als 60°, vorzugsweise mehr als 75° beträgt, insbesondere 80°.

3. Befestigungsanordnung (1) gemäß einem der vorhergehenden Ansprüche,
**dadurch gekennzeichnet, dass** der Haltering (13) wenigstens einen Spülluftkanal(14) aufweist.

4. Befestigungsanordnung (1) gemäß einem der vorhergehenden Ansprüche,
**dadurch gekennzeichnet, dass** der Haltering (13) die Außenkontur (131) einer Kugelschicht und der Flansch (15) eine dazu korrespondierende Innenkontur (151) aufweist.

5. Befestigungsanordnung (1) gemäß einem der vorhergehenden Ansprüche,
**dadurch gekennzeichnet, dass** die Antenne (5) und die Barriere (9) in einem Gehäuse (17) angeordnet sind, das die Antenne (5) und die Barriere voneinander beabstandet haltert.

6. Befestigungsanordnung (1) gemäß Anspruch 5
**dadurch gekennzeichnet, dass** eine Position des Halterings (13) über wenigstens eine, vorzugsweise zwei von außerhalb des Gehäuses (17) zugänglichen Verstelleinrichtungen (19) veränderbar und festlegbar ist.

7. Befestigungsanordnung (1) gemäß Anspruch 5
**dadurch gekennzeichnet, dass** die Verstelleinrichtungen (19) als zwei in dem Gehäuse (17) angeordnete Rändelschrauben ausgebildet ist.

8. Befestigungsanordnung (1) gemäß Anspruch 5
**dadurch gekennzeichnet, dass** die Verstelleinrichtung (19) als wenigstens ein Schwenkhebel ausgebildet ist.

9. Befestigungsanordnung (1) gemäß Anspruch 5
**dadurch gekennzeichnet, dass** das Gehäuse (17) innenseitig wenigstens abschnittsweise, vorzugsweise vollständig mit einem mikrowellenabsorbierenden Material (21) ausgekleidet oder aus diesem gefertigt ist.

10. Befestigungsanordnung (1) gemäß einem der Ansprüche 5 bis 9
**dadurch gekennzeichnet, dass** das Gehäuse (17) geeignet ausgestaltet ist, eine Mehrzahl unterschiedlich ausgestalteter Radarfüllstandmessgeräte (3) aufzunehmen.

11. Befestigungsanordnung (1) gemäß einem der vorhergehenden Ansprüche,
**dadurch gekennzeichnet, dass** der Haltering (13) zweiteilig als zwei in Umfangsrichtung gegeneinander verdrehbare Keilringe ausgebildet ist, von denen der eine zumindest in Axialrichtung festgelegt ist und der andere die Barriere (9) haltert.

12. Befestigungsanordnung (1) gemäß einem der vorhergehenden Ansprüche,
**dadurch gekennzeichnet, dass** die Barriere (9) wenigstens auf einer der Antenne (5) abgewandten Oberfläche eine Beschichtung (91), vorzugsweise eine Antihaftbeschichtung aufweist.

## Claims

1. A fastening assembly (1) for a radar level-measuring device (3) with an antenna (5) with a main emission direction (H), comprising a microwave window (7) for the spatial and thermal separation and microwave connection of a first space (I) and a second space (II) with a plate-shaped, disk-shaped barrier (9) at least partially permeable to microwaves,
wherein
a surface of the barrier (9) oriented towards the antenna (5) includes an angle unequal to 90° with the main emission direction (H), wherein the barrier (9) is disposed in a retaining ring (13) located in a flange (15),
**characterized in that**
the retaining ring (13) is configured to be tiltable relative to the flange (15).

2. The fastening assembly (1) according to claim 1,
**characterized in that**
the angle (a) is greater than 60°, preferably greater than 75°, in particular 80°.

3. The fastening assembly (1) according to any one of the preceding claims,
**characterized in that**
the retaining ring (13) has at least one flushing air duct (14).

4. The fastening assembly (1) according to any one of the preceding claims,
**characterized in that**
the retaining ring (13) has the outer contour (131) of a spherical segment, and the flange (15) an inner contour (151) corresponding thereto.

5. The fastening assembly (1) according to any one of the preceding claims,
**characterized in that**
the antenna (5) and the barrier (9) are disposed in a housing (17) that secures the antenna (5) and the barrier so that they are spaced apart.

6. The fastening assembly (1) according to claim 5,
**characterized in that**
a position of the retaining ring (13) can be changed and fixed by means of at least one, preferably two adjusting devices (19) accessible from outside the housing (17).

7. The fastening assembly (1) according to claim 5,
**characterized in that**
the adjusting devices (19) are configured as two knurled screws disposed in the housing (17).

8. The fastening assembly (1) according to claim 5,
**characterized in that**
the adjusting device (19) is configured as at least one pivot lever.

9. The fastening assembly (1) according to claim 5,
**characterized in that**,
the housing (17), on its inner face, is lined with or made from a microwave-absorbing material (21) at least in some portions, preferably completely.

10. The fastening assembly (1) according to any one of the preceding claims 5 to 9,
**characterized in that**
the housing (17) is suitably configured for accommodating a plurality of differently configured radar level-measuring devices (3).

11. The fastening assembly (1) according to any one of the preceding claims,
**characterized in that**
the retaining ring (13) has a two-part configuration as two wedge rings that can be rotated relative to one another in the circumferential direction, of which the one is fixed at least in the axial direction and the other secures the barrier (9).

12. The fastening assembly (1) according to any one of the preceding claims,
**characterized in that**
the barrier (9) has a coating (91), preferably an anti-adherent coating, at least on a surface facing away from the antenna (5).

## Revendications

1. Agencement de fixation (1) pour un appareil de mesure de niveau à radar (3) comprenant une antenne (5) ayant une direction d'émission principale (H) avec une fenêtre en hyperfréquence (7) pour la séparation spatiale et thermique et la liaison en hyperfréquence d'un premier espace (I) et d'un deuxième espace (II) à une barrière (9) en forme de disque, en forme de plaque et au moins en partie perméable aux micro-ondes, dans lequel une surface de la barrière (9), qui est orientée vers l'antenne (5) forme un angle différent de 90° avec la direction d'émission principale (H), dans lequel la barrière (9) est agencée dans une bague de maintien (13) qui se trouve dans une bride (15),
**caractérisé par le fait que**
ladite bague de maintien (13) est conçue de manière à pouvoir être basculée par rapport à la bride (15).

2. Agencement de fixation (1) selon la revendication 1,
**caractérisé par le fait que**
l'angle (a) est supérieur à 60°, de préférence supérieur à 75°, en particulier il est de 80°.

3. Agencement de fixation (1) selon l'une quelconque des revendications précédentes,
**caractérisé par le fait que**
la bague de maintien (13) comprend au moins un conduit d'air de balayage (14).

4. Agencement de fixation (1) selon l'une quelconque des revendications précédentes,
**caractérisé par le fait que**
la bague de maintien (13) présente le contour extérieur (131) d'une couche sphérique et ladite bride (15) présente un contour intérieur (151) correspondant à celui-ci.

5. Agencement de fixation (1) selon l'une quelconque des revendications précédentes,
**caractérisé par le fait que**
l'antenne (5) et la barrière (9) sont disposées à l'intérieur d'un boîtier (17) qui maintien l'antenne (5) et la barrière à distance l'une de l'autre.

6. Agencement de fixation (1) selon la revendication 5,
**caractérisé par le fait qu'**
une position de la bague de maintien (13) peut être modifiée et fixée par au moins un, de préférence deux dispositifs de réglage (19) accessibles depuis l'extérieur du boîtier (17).

7. Agencement de fixation (1) selon la revendication 5,
**caractérisé par le fait que**
les dispositifs de réglage (19) sont réalisés sous la forme de deux vis moletées disposées à l'intérieur du boîtier (17).

8. Agencement de fixation (1) selon la revendication 5,
**caractérisé par le fait que**
le dispositif de réglage (19) est conçu comme au moins un levier pivotant.

9. Agencement de fixation (1) selon la revendication 5,
**caractérisé par le fait que**
la face intérieure du boîtier (17) est revêtue, au moins par sections, de préférence complètement, d'un matériau (21) absorbant les micro-ondes ou est fabriqué à partir de celui-ci.

10. Agencement de fixation (1) selon l'une quelconque des revendications 5 à 9,
**caractérisé par le fait que**
le boîtier (17) est conçu de manière appropriée pour recevoir une pluralité d'appareils de mesure de niveau à radar (3) de conception différente.

11. Agencement de fixation (1) selon l'une quelconque des revendications précédentes,
**caractérisé par le fait que**
la bague de maintien (13) est conçue en deux parties, comme deux anneaux de coin qui peuvent être tournés l'un par rapport à l'autre dans le sens circonférentiel et dont l'un est fixé au moins dans le sens axial et dont l'autre maintient la barrière (9).

12. Agencement de fixation (1) selon l'une quelconque des revendications précédentes,
**caractérisé par le fait que**
la barrière (9) présente un revêtement (91), de préférence un revêtement antiadhésif, sur au moins une surface montrant dans la direction opposée à l'antenne (5).
